# EUROPEAN PATENT APPLICATION

(11) **EP 2 378 821 A2**
(43) Date of publication of application: **19.10.2011**
(21) Application number: 11002944.4
(22) Date of filing: 07.04.2011
(51) Int. Cl.: H04W 52/36

(54) **Communication device and method thereof**

(30) Priority: 07.04.2010 US 321691 P
(71) Applicant: HTC Corporation, Taoyuan County 330 (TW)
(72) Inventor: Jen, Yu-Chih, Taoyuan City Taoyuan County 330 (TW)
(74) Representative: Wagner, Karl H.

(57) **Abstract**

Methods for a communication device. The method comprises being configured with at least one uplink carrier and at least one downlink carrier according to a carrier aggregation configuration, receiving at least one control signal at at least one downlink control channel on the at least one downlink carrier, determining at least one control format of the at least one control signal for at least one uplink or at least one downlink transmission or for at least one control signaling carried on the same or different at least one uplink carrier or the at least one downlink carrier, and performing at least one of the at least one uplink and the at least one downlink transmission or at least one control signaling on the same or different at least one uplink carrier or the at least one downlink carrier according to the at least one control format of the at least one control signal, wherein the at least one of at least one uplink and the at least one downlink transmission or the at least one control signaling use a same or different transmission modes on the same or different at least one uplink carrier or the at least one downlink carrier.

## Description

### CROSS REFERENCE TO RELATED APPLICATIONS

This application claims the benefit of U.S. Provisional Application No. 60/321,691, filed on 7th April 2010, the entirety of which is incorporated by reference herein.

### BACKGROUND OF THE INVENTION

### Field of the Invention

The present invention relates to power control, and in particular relates to a communication device and method thereof for providing power control of the multiple carriers.

### Description of the Related Art

A Long Term Evolution (LTE) or LTE Advanced (LTE-A) system is an evolved next-generation wireless communication system proposed by the Third Generation Partnership Project (3GPP). A user equipment (UEs) compliant with the LTE/LTE-A system may simultaneously transmit and receive data on one or more component carriers. The LTE-A system provides high-speed low-latency packet-based communications at a data rate of up to 100 Mbps through engagement of carrier aggregation, where up to five 20MHz component carriers are aggregated. The LTE-A system can operate in symmetric and asymmetric configurations with respect to the bandwidth of the component carriers and the number of component carriers. The LTE/LTE-A system includes an Evolved Universal Terrestrial Radio Access Network (EUTRAN) having a plurality of evolved Node-Bs (eNBs), which communicate wirelessly with a plurality of UEs though uplink and downlink radio channels.

In the LTE/LTE-A system, UEs receive data and certain control information on a physical downlink shared channel (PDSCH). The transmission of the PDSCH is scheduled and controlled by an eNB using a so-called downlink scheduling assignment, which is carried on a physical downlink control channel (PDCCH). Also, when interested in sending uplink data to an eNB, a UE transmits a Scheduling Request (SR) message to the eNB, which in turn responds with an uplink scheduling grant in the PDCCH to provide control information for uplink transmission(s) of a Physical Uplink Shared Channel (PUSCH) and a Physical Uplink Control Channel (PUCCH) to the UE.

The LTE/LTE-A systems deploy multiple input multiple output (MIMO) schemes, where a base station and a UE simultaneously perform multiple transmissions spatially by using two or more transmitting/receiving antennas so as to increase system capacity. The MIMO schemes can implement transmit diversity, spatial multiplexing or beamforming by using several transmitting antennas. In the LTE/LTE-A systems, Transmit Power Control (TPC) of transmission signals is controlled by the base station, which informs the UE of a maximum allowable level for transmission power, so that the transmission power delivered in the uplink channels does not cause interference with neighboring channels, and power usage at the UE may be reduced. The employment of the MIMO scheme increases the complexity of transmit power control. Thus, communication devices capable of providing transmit power management for multiple carriers in the MIMO scheme and methods thereof are in need.

### BRIEF SUMMARY OF THE INVENTION

A detailed description is given in the following embodiments with reference to the accompanying drawings.

An embodiment of a method for a communication device is disclosed, comprising being configured with at least one uplink carrier and at least one downlink carrier according to a carrier aggregation configuration, receiving, by the communication device, at least one control signal at at least one downlink control channelon the at least one downlink carrier, determining, by the communication device, at least one control format of the at least one control signal for at least one of at least one uplink and at least one downlink transmission or for at least one control signaling carried on the same or different at least one uplink carrier or the at least one downlink carrier, and performing, by the communication device, at least one of the at least one uplink and the at least one downlink transmission or at least one control signalingon the same or different at least one uplink carrier or the at least one downlink carrier according to the at least one control format of the at least one control signal, wherein the at least one of at least one uplink and the at least one downlink transmission or the at least one control signaling use a same or different transmission modes on the same or different at least one uplink carrier or the at least one downlink carrier.

Another embodiment of a method for a communication device is provided, comprising receiving, by a communication device, a control signal comprising at least one carrier indication field (CIF) on a downlink control channel on a downlink carrier, decoding, by the communication device, the control signal with a Transmit Power Control Radio Network Temporary Identity (TPC-RNTI), and determining, by the communication device, the decoded control signal as a PDCCH formats 3 or 3A when a data size of the decoded control signal equals to a predetermined data size.

Still another embodiment of a method for a communication device is revealed, comprising being configured with at least one uplink carrier and at least one downlink carrier according to a carrier aggregation configuration, being configured with a transmit power control PUCCH RNTI (TPC-PUCCH-RNTI), a PUCCH TPC index, at least one TPC-PUSCH-RNTI, and at least one PUSCH TPC index, receiving, by the communication device, at least one control signal on at least one downlink control channel, decoding, by the communication device, at least one control signal with the TPC-PUCCH-RNTI, the PUCCH TPC index, the at least one TPC-PUSCH-RNTI, and the at least one PUSCH TPC index to obtain at least one TPC command corresponding to the at least one uplink carrier, and adjusting, by the communication device, at least one transmit power of the at least one uplink carrier that carry uplink channelsaccording to the at least one TPC command.

Yet another embodiment of a method for a communication device is described, comprising transmitting, by the communication device, at least one uplink control signal on at least one uplink carrier, determining, by the communication device, at least one power headroom report (PHR) according to at least one transmit power of the at least one uplink control signal, and transmitting, by the communication device, the at least one power headroom report on the at least one uplink carrier, on one of the at least one uplink carrier, or on a first uplink carrier.

Still yet another embodiment of a method for a communication device is disclosed, comprising the communication device being configured with at least one uplink carrier according to a carrier configuration, and triggering to determine a power headroom report for each uplink carrier according to a PHR configuration of each carrier.

Another embodiment of a method for a communication device is revealed, comprising receiving, by the telecommunication device, a plurality of downlink transmission signals on a plurality of downlink carriers, in response to the downlink transmission signals, transmitting, by the telecommunication device, at least one uplink control signal comprising a Channel Quality Indicator (CQI), a Scheduling Request (SR), or ACK/NACK according to at least one PUCCH resource, wherein the at least one PUCCH resource is determined or used according to at least one configuration parameter specific to the telecommunication device, at least one carrier offset relative to at least one downlink carrier, at least one received PDCCH resource, a bandwidth of the first carrier, at least one PUCCH format type, a cell configuration, an orthogonal hopping sequence, or a cyclic shift pattern.

Yet another embodiment of a method for a communication device is provided, comprising being configured with at least one uplink carrier and at least one downlink carrier according to a carrier aggregation configuration, transmitting a first PUCCH format comprising a PUCCH format type information and power headroom report for at least one of the at least one uplink carrier, or transmitting a second PUCCH format comprising at least one of at least one ACK/NACK signaling and at least one channel quality indicator in response to at least one downlink transmission on at least one of the at least one downlink carrier.

### BRIEF DESCRIPTION OF THE DRAWINGS

The present invention can be more fully understood by reading the subsequent detailed description and examples with references made to the accompanying drawings, wherein:

FIG. 1 depicts a system diagram of a Long Term Evolution (LTE) and/or LTE-Advanced (LTE-A) wireless communication system 1;

FIG. 2 is an exemplary block diagram of a wireless communication device 2 according to the invention;

FIG. 3 is an exemplary flowchart of a communication method 3 according to the invention;

FIG. 4 is an exemplary flowchart of a communication method 4 according to the invention;

FIG. 5 is another exemplary flowchart of a communication method 5 according to the invention;

FIG. 6 is another exemplary flowchart of a communication method 6 according to the invention;

FIG. 7 is another exemplary flowchart of a communication method 7 according to the invention; and

FIG. 8 is another exemplary flowchart of a communication method 8 according to the invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims. The 3GPP specifications are used to teach the spirit of the invention, and the invention is not limited thereto.

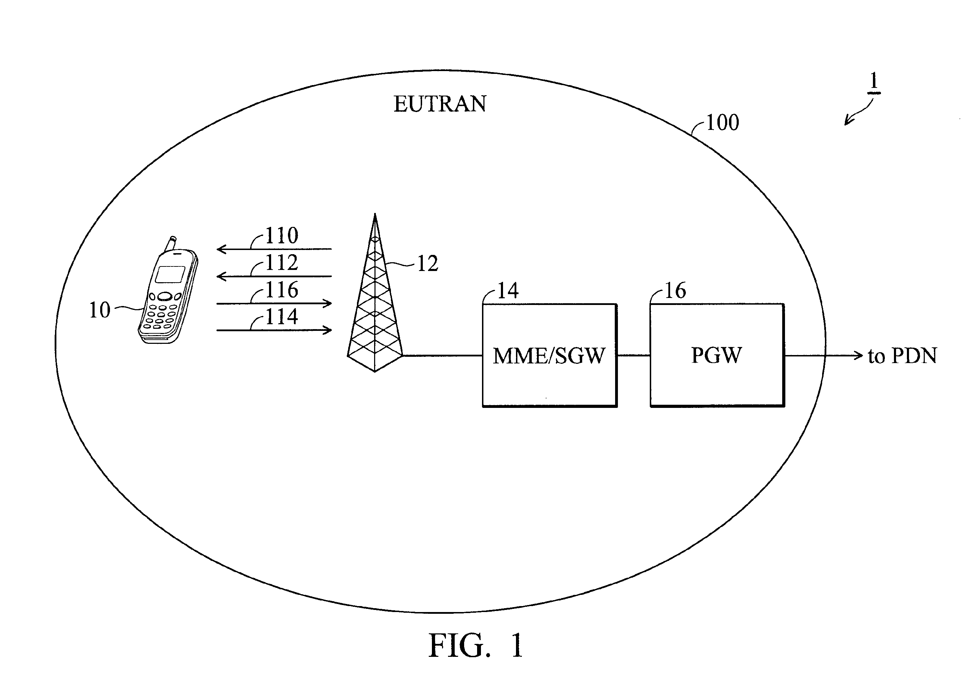

FIG. 1 depicts a system diagram of a Long Term Evolution (LTE) and/or LTE-Advanced (LTE-A) wireless communication system 1, comprising a UE 10, an evolved Node-B (eNB) 12, a Mobility Management Entity/ Serving Gateway(MME/SGW) 14, and a Public Data Network (PDN) gateway (PGW) 16. The UE 10 is coupled to the eNB 12, and then to the MME/SGW 14, and then to the PGW 16. Although a single UE 10 and eNB 12 are shown in FIG. 1, it should be apparent that any number and any combination of wireless and wired UE 10 and eNB 12 devices may be incorporated in the LTE/LTE-A wireless communication system 1.

The UE 10 and eNB 12 communicates with one another through wireless uplink component carriers 110 and 112, and downlink component carriers 114 and 116. Although two uplink and downlink component carriers are shown in FIG. 1, any numbers and combination of the uplink and downlink component carriers may be used for communication. Different numbers of the uplink and downlink component carriers is referred to as asymmetric aggregation. The LTE/LTE-A wireless communication system 1 employs multiple carriers and asymmetric aggregation. The MME/SGW 14 performs PDCCH scrambling, modulation, precoding and layer mapping to generate PDCCH control signals, and then transmits the PDCCH control signals to provide information on uplink scheduling grants, downlink assignments, power control commands, resource block allocation, HARQ process, and so on, to all of the UEs in the coverage area 100. The PGW 16 provides connectivity to external packet data networks (not shown) of the , by being the point of exit and entry of traffic for the UE 10 as a gateway to a public data network (not shown).

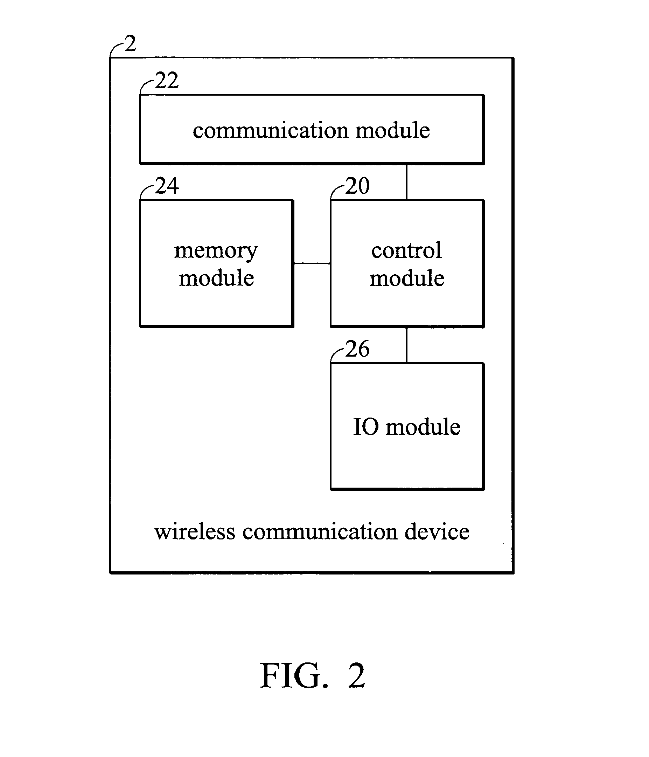

FIG. 2 is an exemplary block diagram of a wireless communication device 2 according to the invention, incorporated as the UE 10 in the FIG. 1. The wireless communication device 2 comprises a control module 20, a communication module 22, a memory module 24, an IO module 26, and a power supply module (not shown). The control module 20 is coupled to the communication module 22, the memory module 24, the IO module 26, and the power supply module.

The wireless communication device 2 is any device used directly by an end-user for communications, e.g., handhold mobile phones, laptop equipped with broadband network adaptors, or any other device capable of communicating.

The control module 20 may comprise hardware to perform baseband signal processing including digital signal processing, and coding and decoding, to configure and control the communication module 22, the memory module 24, the IO module 26, and the power supply module, and so on. The communication module 22 may comprise hardware to perform analog to digital conversion (ADC), digital to analog conversion (DAC), gain adjusting, modulation, demodulation, and so on. The communication module 22 comprises a plurality of transmitters (not shown) and receivers (not shown) coupled to antennas (not shown) to perform transmission and reception of RF transmission signals on a plurality of component carriers, wherein each transmitter or receiver is tuned to transmit or receive transmissions on a specific component carrier with a specific carrier frequency. The communication module 22 may receive RF signals from the eNB 12 and down-convert the received RF transmission signals to baseband signals to be processed by the control module 20, or receive baseband signals from the control module 20 to up-convert the received baseband signals to RF transmission signals for uplink transmissions. The communication module 22 may comprise a mixer to up-convert the baseband signals with a component carrier signal oscillated at a radio frequency of the wireless communications system. The radio frequency may be 900MHz, 2100MHz, or 2.6GHz utilized in LTE systems, or others depending on the radio access technology (RAT) in use. The memory module 24 may be any storage medium accessible by the controller 20, including a read only memory (ROM), a random access memory (RAM), a register, cache memory, semiconductor memory devices, and magnetic media such as internal hard disks and removable disks. The IO module 26 provides input and output operations, and may comprise a keyboard, a touch pad, a display, a microphone, a speaker, and so on. The power supply module may be a battery to power up all modules in the wireless communication device 2.

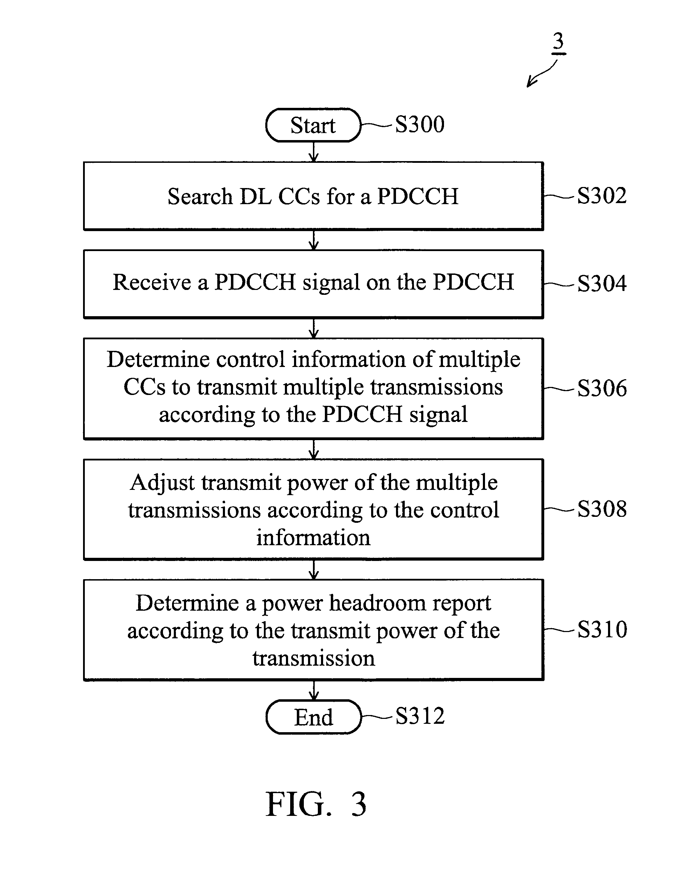

FIG. 3 is an exemplary flowchart of a communication method 3 according to the invention, incorporated in the wireless communication device 2 in FIG. 2.

In Step 300, the wireless communication device 2 is initiated to detect a Physical Downlink Control channel (PDCCH) upon start of the communication method 3.

In Step S302, the control module 20 controls the communication module 22 to search through a common search space and the UE-specific search space of the downlink component carriers for a PDCCH candidate. The PDCCH candidate may be on one or multiple downlink component carriers. The PDCCH candidate may carry scheduling assignments, power control, and other control information in the form of a PDCCH format. The common search space carries the common control information and is monitored by all wireless communication devices in the coverage of the eNB 12. The UE-specific search space carries control information specific to the wireless communication device 2 and is monitored by the wireless communication device 2 in the coverage of the eNB 12. Unlike the common search space, the starting location of the UE-specific search space may be varied for each subframe or UE. The PDCCH candidate may be the channel carrying signals that have passed a cyclic redundancy code (CRC) check using a cell radio network temporary identifier (C-RNTI), a temporary C-RNTI, a semi-persistent RNTI (SPS-RNTI), transmit power control RNTI (TPC-RNTI) or other RNTIs.

In Step S304, the control module 20 controls the communication module 22 to receive a PDCCH signal (control signal) on the PDCCH candidate (downlink control channel). This PDCCH signal is a control signal enabling the communication device 2 to receive, demodulate, and decode a downlink transport channels (DL-SCH), and is referred to as PDCCH Downlink scheduling Control Information (DCI). The PDCCH carries the PDCCH signal to provide uplink scheduling grants, downlink assignments, power control commands, resource block allocation, and HARQ information to the wireless communication device 2. The PDCCH may carry different PDCCH formats depending on the type of required control information. The PDCCH format can be 0, 1, 2, and 3 depending upon the number of bits to be transmitted. For example, the PDCCH format 0 is for transmission of an uplink shared channel (UL-SCH) allocation, the PDCCH format 1A is for compact transmission of a DL-SCH allocation for an SIMO operation or allocation of a dedicated preample signature to a UE for random access, and the PDCCH formats 3 and 3A are for transmissions of transmit power control (TPC) commands for a group of uplink channels. The control signal comprises information on resource allocation, modulation, coding scheme, or transmit power control (TPC) of the transmissions.

In Step S306, the control module 20 determines control information of the multiple (at least two) component carriers to transmit multiple (at least two) transmissions according to the PDCCH signal. Upon detection of a PDCCH signal on the PDCCH, the control module decodes, demodulates and descrambles the received PDCCH signal to obtain a PDCCH format comprising control information for the multiple component carriers, such as uplink scheduling grants, downlink assignments, power control commands, resource block allocation, and HARQ information. The multiple transmissions are performed on a physical downlink shared channel (PDSCH), a physical uplink shared channel (PUSCH), or a physical uplink control channel (PUCCH). For example, the PDCCH signal may comprise a PDCCH format 0 for an uplink grant comprising information on Resource Block (RB), channel allocation or assignment, and Modulation and Coding Scheme (MCS). The control module 20 may map a corresponding PUSCH or PUCCH to the component carriers according to the allocated RB and channel assignment information, and perform modulation/demodulation and coding/decoding on the transmitted/received transmission signals according to the MCS information. In another example, the PDCCH signal may comprise a PDCCH format 3 with information on group power control of the wireless communication devices in the coverage area 100. In yet another example, the downlink transmission of the physical downlink shared channel (PDSCH) is scheduled and controlled by a downlink scheduling assignment in the PDCCH signal on the PDCCH from the base station. As part of the downlink scheduling assignment in the PDCCH format, the communication module 22 receives control information on the modulation and coding Scheme (MCS), downlink resources allocation, and other control information, so that the control module 20 can decode the allocated PDSCH resources on the correspondingly allocated downlink resources.

In Step S308, the control module 20 controls the communication module 22 to adjust transmit power of the multiple transmissions according to a transmit power control (TPC) command in the PDCCH format. The communication module 22 delivers the scheduled transmission on the PUCCH or PUSCH using the adjusted transmit power. For example, the TPC command can be found in PDCCH formats 3 or 3A for the group power control of uplink channels, in a PDCCH format 0 for uplink channel scheduling, in a PDCCH format 1 for downlink assignment. The TPC command in the PDCCH format 1 is applicable to the power control of the PUCCH by the communication device 2 in response to the downlink PDSCH transmission in the PDSCH. The uplink and downlink transmissions on the PUSCH, PUCCH, or PDSCH signals may be on one or multiple uplink and downlink component carriers. When multiple PDSCH transmissions on one or more downlink component carrier are received at the communication module 22, the control module 20 determines a transmit power adjustment that can be applied to the PUCCH for the ACK/NACK control signaling. In one embodiment, the control module 20 combining all TPC commands in the downlink scheduling (PDCCH format 1) corresponding to the multiple PDSCH transmissions to derive a combined TPC command with an adaptive granularity different from the granularity for single PDSCH transmission, e.g., the adaptive granularity less than the single PDSCH transmission granularity. In another embodiment, the control module 20 combines all TPC commands with defined granularity, such as in 3GPP Release 8, to derive a combined TPC command bounded within a predetermined TPC range that comprises upper and lower bounds of the transmit power control. In yet another embodiment, the control module 20 selects certain number of TPC commands from all TPC commands corresponding to the multiple PDSCH transmissions (e.g. the TPC commands with smallest combined power adjustment) to derive a new TPC command for the PUCCH. In addition, the selection of the new TPC command may jointly consider channel status or previous transmission status or power adjustment bound. In still another embodiment, the EUTRAN can set all TPC commands corresponding to the multiple PDSCH transmissions to one value, such that the communication module 22 can perform transmit power adjustment for the PUCCH according to the common value in all TPC command. In still yet another embodiment, the control module 20 select one from all TPC commands, so that the communication module 22 can perform transmit power adjustment according thereto for the PUCCH.

In Step S310, the control module 20 determines a power headroom report according to the power of the transmissions and channel of the transmissions. The control module 20 may determine separate power headroom reports for the PUSCH and PUCCH respectively, or a combined power headroom report for the PUSCH and PUCCH. The content of the power headroom report may comprise a difference between the maximum allowed transmission power and the allocated power, either a total value or a value per resource block, or the allocated power, either a total value or a value per resource block. The power headroom report may also comprise either a PUCCH format, a PUSCH transmission mode, or a component carrier.

In Step S312, the communication method 3 is completed and exited.

The communication method 3 offers a power control mechanism for multiple uplink and downlink component carriers in the LTE/LTE-A network system.

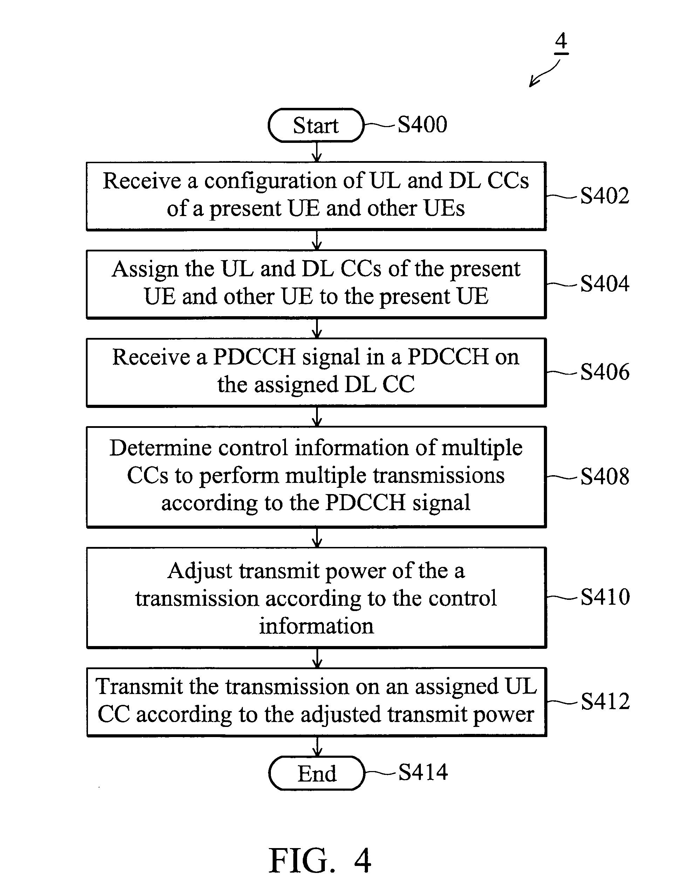

FIG. 4 is another exemplary flowchart of a communication method 4 according to the invention, incorporated in the wireless communication device 2 in FIG. 2.

In Step S400, the wireless communication device 2 is initiated and establishes an RRC connection upon startup of the communication method 4.

In Step S402, the communication module 22 receives a configuration of uplink and downlink component carriers of the wireless communication device 2 and other communication devices (not shown) through radio resource controller (RRC) signaling. The mapping of the downlink component carrier with the uplink component carriers may be semi-static and defined by an RRC message *RRCConnectionConfiguration* upon a connection setup stage or at a later stage or event by am RRC message *RRCConnectionReconfiguration.* The asymmetric aggregation can add or remove one or more component carriers, either in uplink or downlink direction, using the RRC message *RRCConnectionReconfiguration* such that the number of component carriers are asymmetric (different) in uplink and downlink direction. For example, an *RRCConnectionConfiguration* RRC message may pair a downlink component carrier with an uplink component carrier, and subsequently, an *RRCConnectionReconfiguration* RRC message may configure an additional uplink component carrier and pair it to the existing downlink component carrier, resulting in the two uplink component carriers to map to the downlink component carrier.

In Step S404, the control module 20 assigns the uplink and downlink component carriers of the wireless communication device 2 and the second wireless communication device to the wireless communication device 2, i.e., assigning the first, second, and third downlink component carriers in the configuration to receive downlink transmissions, wherein the first and the second uplink component carriers in the configuration transmit uplink transmissions. Although the third downlink component carrier and the second uplink component carrier are not assigned to the wireless communication device 2 in the configuration, the wireless communication device 2 may still include unassigned component carriers for transmission. Thus, in the case where signal quality on the assigned component carriers has degraded, the unassigned component carriers can be utilized for transmissions.

Similar to the communication method 3, in Step S406, the communication module 22 searches through a common search space and UE-specific search space of the downlink component carriers for a PDCCH to receive a PDCCH signal (downlink control signal) on the assigned DL component carrier, and receives the PDCCH signal on the first, second, or third downlink component carrier. The PDCCH control signals can be sent on the downlink component carriers. Despite the EUTRAN network assigning the third downlink component carrier to the second wireless communication device, it can still employ the third downlink component carrier to deliver control information on the PDCCH for the communications device 2 when the channel condition of the first and second downlink component carriers are too noisy from transmissions. When detecting a PDCCH control signal for the wireless communication device 2 on a component carrier assigned for the second wireless communication device, the wireless communication device 2 can make use of the PDCCH control signal to retrieve the control information therein. The control information comprises uplink scheduling grants, downlink assignments, power control commands, resource block allocation, or HARQ information.

As the communication method 3, in Step S408, the control module 20 determines control information of the multiple (at least two) component carriers to perform multiple (at least two) transmissions according to the PDCCH signal. When the PDCCH signal comprises PDCCH formats 3 or 3A, the control module 20 can demodulate, decode, and descramble the received PDCCH signal to extract TPC commands for the multiple transmissions on the PUCCH or PUSCH.

In Step S410, the control module 20 controls the communication module 22 to adjust transmit power of the multiple transmissions according to the corresponding TPC commands. For example, the first uplink component carrier is assigned to carry a PUCCH transmission and the second uplink component carrier is assigned to carry the PUSCH transmission, wherein the communication module 22 can adjust the transmit power of the PUCCH transmission to be transmitted on the first uplink component carrier according to the corresponding TPC command, and adjust the transmit power the PUSCH transmission to be transmitted on the second uplink component carrier according to the other corresponding TPC command.

In Step S412, the communication module 22 transmits the multiple transmissions on one or more assigned UL component carrier according to the adjusted transmit power. Taking Step S410, as an example, the control module 20 may determine that the channel condition of the second uplink component carrier is too noisy for reliable transmissions, and thus transmits the PUSCH transmission on the third uplink component carrier instead. Thus, the communication module 22 adjusts the transmit power of the PUSCH transmission to be transmitted on the third uplink component carrier according to the other corresponding TPC command.

In Step S414, the communication method 4 is completed and exited.

In one embodiment, the telecommunication module 22 receives an *RRCConnectionConfiguration* message (carrier aggregation configuration) comprising a first downlink carrier not paired with a first uplink carrier. Although the first downlink carrier is not paired with the first uplink carrier, the communication module 22 still receives one or more PDCCH signal on the first downlink carrier that includes one or more PDCCH format addressing one or more uplink transmission on the first uplink carrier. Therefore the control module 20 adjusts the transmit power of the uplink transmission according to the TPC command in the PDCCH format, and the communication module 22 transmits the uplink transmission on the first uplink component carrier according to the adjusted transmit power. The uplink transmission may be a PUCCH transmission or a PUSCH transmission.

In another embodiment, the telecommunication module 22 receives an *RRCConnectionConfiguration* message (carrier aggregation configuration) comprising first and second downlink carriers paired with a second uplink carrier. The communication module 22 receives one or more PDCCH signal on the first or the second downlink carrier that includes one or more PDCCH format addressing one or more uplink transmission on the first uplink carrier. Therefore the control module 20 adjusts the transmit power of the uplink transmission according to the TPC command in the PDCCH format, and the communication module 22 transmits the uplink transmission on the paired second uplink component carrier according to the adjusted transmit power. The uplink transmission may be a PUCCH transmission or a PUSCH transmission.

The communication method 4 offers another exemplary power control mechanism for multiple uplink and downlink component carriers in the LTE/LTE-A network system.

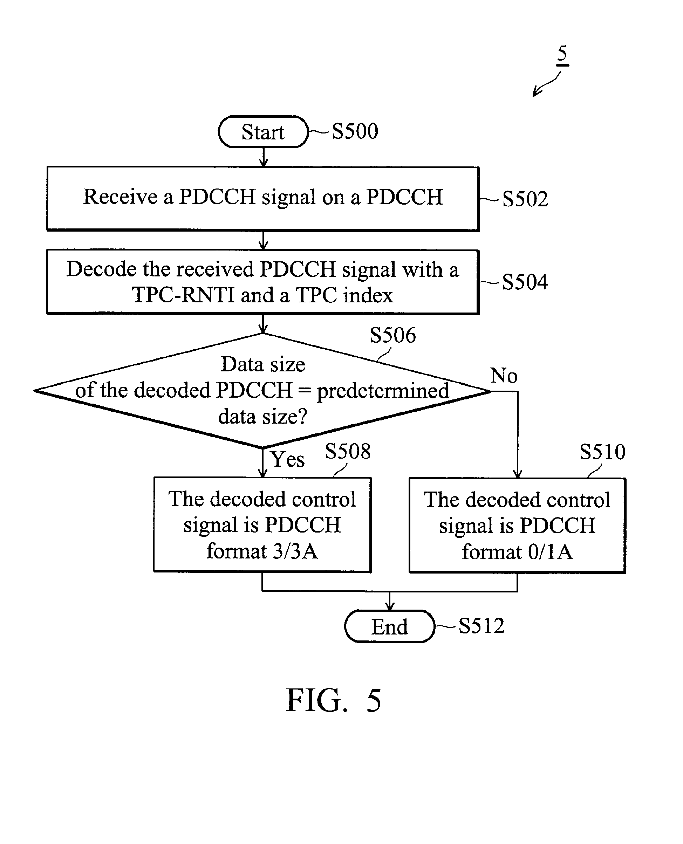

FIG. 5 is another exemplary flowchart of a communication method 5 according to the invention, incorporated in the wireless communication device 2 in FIG. 2.

In Step S500, the wireless communication device 2 is initiated to detect a PDCCH upon start of the communication method 5

Next in Step S502, the communication module 22 receives a PDCCH signal on a PDCCH. The PDCCH signal may comprise a PDCCH formats 3 or 3A indicating a group power control for the UEs in the network coverage area 100. The PDCCH formats 3 or 3A comprise TPC commands that inform the communication device 2 to increase or decrease transmit powers for uplink transmissions. The PDCCH formats 3 and 3A can comprise a different number of bits to represent the TPC commands. For example, the PDCCH format 3 comprises 1-bit TPC commands to indicate the increasing or decreasing of transmit power by 1-unit step, and the PDCCH format 3A comprises 2-bit TPC commands to indicate the increasing or decreasing of the transmit power by up to 2-unit step. Consequently the PDCCH format 3A offers more flexibility to adjust the transmit power for the uplink channels on the uplink component carriers. The PDCCH formats 3 or 3A comprise one or more carrier indicator fields (CIF) to indicate the component carrier allocation of the respective physical downlink data channel (PDSCH) during cross-carrier scheduling. The number of CIFs is selected such that the data size of the PDCCH formats 3 or 3A is different from that of the PDCCH formats 0 or 1A, i.e., exceeding or less than the data size of the PDCCH formats 0 or 1A. The carrier indicator field allows for the allocation of traffic channels in the component carriers that may be different from the component carrier on which the PDCCH is transmitted, giving flexibility to carrier selection for PDCCH transmissions; which is particularly useful for asymmetric multi-carrier systems.

In Step S504, the control module 20 decodes the received PDCCH signal with a Transmit Power Control (TPC) Radio Network Temporary Identifiers (TPC-RNTI) and a TPC index. The TPC-RNTI and the TPC index may be provided to the wireless communication device 2 through RRC signaling. Power control for uplink channels may be directed to a group of UEs using a TPC-RNTI which is specific for the group. The wireless communication device 2 may be allocated two power-control RNTIs, one for PUCCH power control and the other for PUSCH power control. The transmit power control PUSCH RNTI (TPC-PUSCH-RNTI) is the identification for the power control of the PUSCH and the transmit power control PUCCH RNTI (TPC-PUCCH-RNTI) is the identification for the power control of the PUCCH. Although the power control RNTIs are common to a group of UEs, including the wireless communication device 2, in the coverage area 100, each UE may be informed via RRC signaling which TPC bit in the PDCCH formats 3 or 3A is used for its power control. The TPC-PUSCH-RNTI, TPC-PUCCH-RNTI or both may be specific to an uplink component carrier. The wireless communication device 2 decodes PDCCH DCI formats 3 or 3A with TPC-PUSCH-RNTIs, or TPC-PUCCH-RNTIs or both.

In Step S506, the control module 20 determines whether a data size of the decoded PDCCH signal equals to a predetermined data size. The predetermined data size correlates to the number of CIFs included in the PDCCH formats 3 or 3A, and is a fixed value. If so, the control module 20 determines whether the decoded control signal is in the PDCCH format 3 or PDCCH format 3A, in Step S508. Otherwise, the control module 20 determines whether the decoded control signal is in the PDCCH format 0 or PDCCH formats 1A in Step S510, since the data size of the PDCCH formats 0 or 1A is different from that of the PDCCH formats 3 or 3A. Since Step S506 involves only a comparison for determination of the PDCCH format type, the communication method 5 requires less hardware resources and decreases computation time in comparison with conventional blind decoding.

In Step S512, the communication method 5 is completed and exited;

The communication method 5 provides an exemplary PDCCH format type determination mechanism in an LTE/LTE-A network system, reducing hardware resource usage and computation time in comparison with the conventional blind decoding method.

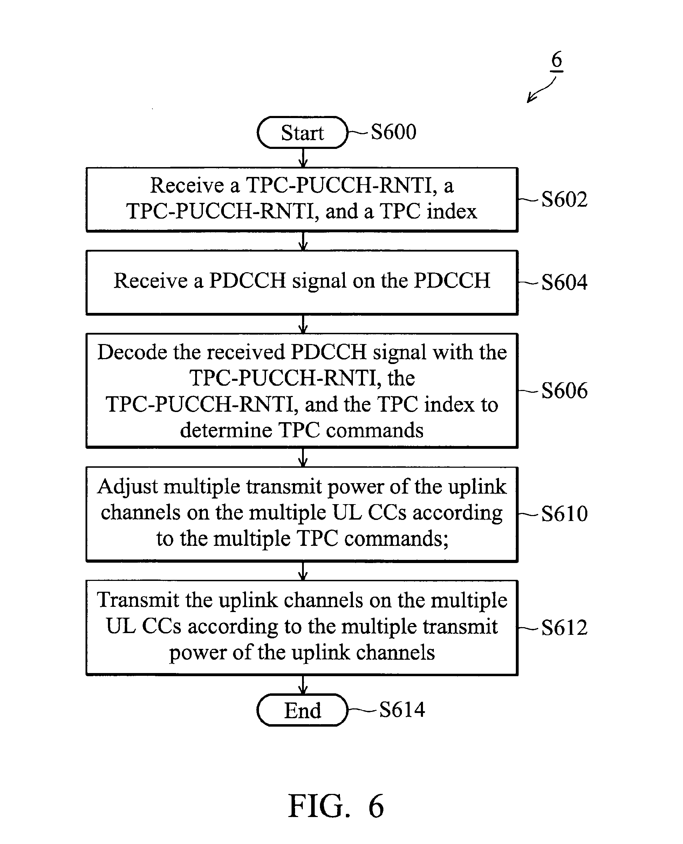

FIG. 6 is another exemplary flowchart of a communication method 6 according to the invention, incorporated in the wireless communication device 2 in FIG. 2.

In Step S600, the wireless communication device 2 is initiated for an RRC connection upon start of the communication method 6

In Step S602, the communication module 22 receives a TPC-PUCCH-RNTI, one or more TPC-PUSCH-RNTI, and one or more TPC index from either the PDCCH control channel or a higher layer signaling such as an RRC signal. After receiving the TPC-PUSCH-RNTI, the one or more TPC-PUSCH-RNTI and the one or more TPC index, the control module 20 can associate the received TPC-PUCCH-RNTI with one of the received TPC index(es), or associate the received TPC-PUSCH-RNTI with one of the received TPC index(es). The telecommunication module 22 receives the TPC-RNTI with the associated TPC index in a configuration from the network via either the PDCCH control channel or a higher layer signaling such as an RRC signal. Each TPC-PUCCH-RNTI and TPC index pair, and TPC-PUSCH-RNTI and TPC index pair is specific to an uplink component carrier.

In one example, the communication module 22 receives one TPC-PUCCH-RNTI, a plurality of TPC-PUSCH-RNTIs, and a plurality of TPC indexes, each TPC-PUSCH-RNTI has a specific TPC index for association, and the TPC-PUCCH-RNTI also has a specific TPC index for pairing together. Each TPC-PUSCH-RNTI may define a power control group for uplink component carriers. For example, the communication module 22 receives a configuration comprising 5 TPC-PUSCH-RNTI and 5 PUSCH TPC indexes, each thereof is component carrier specific. In another example, the communication module 22 receives a configuration comprising 2 TPC-PUSCH-RNTI and 5 PUSCH TPC indexes, where 2 PUSCH TPC indexes thereof are associated with 1 TPC-PUSCH-RNTI thereof, and the other 3 PUSCH TPC indexes thereof are associated with the other TPC-PUSCH-RNTI thereof. Each TPC-PUSCH-RNTI may be carrier-group specific or power control group specific. Each PUSCH TPC indexes may be carrier-group specific or power control group specific.

In another example, the communication module 22 receives a plurality of TPC-PUSCH-RNTIs, and only one TPC index. Each TPC-PUSCH-RNTI defines a power control group; for each power control group defined by a TPC-PUSCH-RNTI, the only one TPC index is assigned or associated thereto, each TPC-PUSCH-RNTI and the TPC index pair corresponds to an uplink component carrier. The EUTRAN can assign a TPC command to a group of telecommunication channels that shares the same TPC-PUSCH-RNTI. The telecommunication channels sharing the same TPC-PUSCH-RNTI may have similar channel characteristics. For example, the communication module 22 receives a configuration comprising 5 TPC-PUSCH-RNTI and 1 PUSCH TPC index for 5 uplink component carriers, each TPC-PUSCH-RNTI is carrier specific. The control module 20 detects the PDCCH signal with the each TPC-PUSCH-RNTI in turn to decode the PDCCH format 3 or 3A, thereby performing transmit power control to the PDCCH transmission on the specific uplink carrier. Since the control module 20 is required to perform up to 5 times TPC-PUSCH-RNTI blind decoding to derive a correct PDCCH format for any uplink component carrier, employment of multiple TPC-PUSCH-RNTI for blind decoding is a hardware and time consuming process.

In yet another example, the communication module 22 receives only one TPC-PUSCH-RNTI, and a plurality of TPC indexes, consequently the only one TPC-PUSCH-RNTI is associated with the plurality of TPC indexes to derive a plurality of TPC commands for transmissions of the PUSCH on corresponding uplink component carriers. Since the communication device 2 has only one TPC-PUSCH-RNTI, the control module 20 only has to perform the blind decoding once to the PDCCH signal to determine a valid PDCCH format, thereby reducing hardware resource and power usage for computing the blinding decoding process. As the communication module 22 can be configured for data transmission on a plurality of component carriers according to a carrier aggregation configuration upon startup of an RRC connection, each TPC-PUSCH-RNTI and TPC index pair, and TPC-PUCCH-RNTI and TPC index pair may be specific to a configured uplink component carrier. The plurality of uplink component carriers can support Semi-Persistent Scheduling.

Next in Step S604, the communication module 22 receives a PDCCH signal on the PDCCH. When the PDCCH signal comprises PDCCH formats 3 or 3A, a TPC command can be determined for power control on the PUCCH and the PUSCH based thereon as in Step S602.

In Step S606, the control module 20 decodes the received PDCCH signal with the TPC-PUCCH-RNTI, the TPC-PUCCH-RNTI, and the TPC index. The control module 20 may decode the PDCCH signal with the TPC-PUSCH-RNTI and the associated TPC index to obtain a PUSCH TPC command, or decode the PDCCH signal with the TPC-PUCCH-RNTI and the associated TPC index to obtain a PUCCH TPC command. The PUSCH TPC command or the PUCCH TPC command may comprise 1-bit data to increase or decrease the transmit power of the transmissions by a 1-unit step in the PDCCH format 3, or comprise 2-bit data to indicate the increasing or decreasing of the transmit power of transmissions by up to a 2-unit step in PDCCH format 3A. The control module 20 can determine whether the control data is the PDCCH format 3/3A through the Cyclic Redundancy Check (CRC) check. The wireless communication device 2 can computes the CRC result for the TPC-PUSCH-RNTI decoded PDCCH signal and the TPC-PUCCH-RNTI decoded PDCCH signal. If the CRC test fails, the communication method 6 is exited at Step S614 and the search is continued in accordance with the communication method 6, otherwise the decoded PDCCH formats 3 or 3A comprises transmit power control information, and is associated with an uplink component carrier.

In Step S610, the control module 20 controls the communication module 22 to adjust a plurality of transmit powers of the uplink channel on the plurality of uplink component carriers according to the plurality of TPC commands. The uplink channels comprise the PUSCH or the PUCCH. During power control for the PUSCH, the communication device 2 retrieves the TPC commands from the PDCCH formats 3 or 3A. If the PDCCH format 3 was sent, then the TPC command is a two bit power adjustment field and if the PDCCH format 3A was sent, then the TPC command is a one bit power adjustment field. Since the PDCCH formats 3 or 3A carry multiple power control commands for a group of UEs, the wireless communication device 2 needs to know which TPC command is applicable for which component carrier. The determination is generally configured by higher layer signalsing, e.g., RRC signaling. In one example, the wireless communication device 2 uses the TPC index, which is sent by higher layers, to determine the TPC command for the specific wireless communication device. Similarly, during power control for the PUCCH, the wireless communication device 2 retrieves the TPC commands from PDCCH formats 3 or 3A. As noted above, if the PDCCH format 3 was sent, then the TPC command is a two bit power adjustment field and if the PDCCH format 3A was sent, then the TPC command is a one bit power adjustment field. Again, as noted above, the wireless communication device 2 needs to know which TPC command is applicable to which specific wireless communication device. In one example, the wireless communication device 2 uses the parameter TPC Index, which is sent by higher layers, to determine the index to the TPC command for the specific wireless communication device.

The communication module 22 may adjust a transmit power of the PUSCH on one corresponding uplink component carrier according to the PUSCH TPC command, or adjust a transmit power of the PUCCH on one corresponding uplink component carrier according to the PUCCH TPC command. During power control for the PUSCH, the wireless communication device 2 adjusts the transmit power of the PUSCH in the uplink component carrier in accordance with the TPC command received for the wireless communication device 2 in the corresponding PDCCH formats 3 and 3A. The wireless communication device 2 then continues to search for the PDCCH formats 33 and 3A with the TPC-PUSCH-RNTIs for the other uplink component carriers. During power control for the PUCCH, the wireless communication device 2 then adjusts the transmit power of the PUCCH in the uplink component carrier in accordance with the TPC command received for the wireless communication device 2 in the corresponding PDCCH formats 3 or 3A. Next the wireless communication device 2 continues to search for the PDCCH formats 3 or 3A with the TPC-PUCCH-RNTIs for other uplink component carriers. In some examples, only one uplink component carrier carries the PUCCH. In other example, the PUCCH can be carried in more than one uplink component carrier. In the case where the wireless communication device 2 receives a reconfiguration of only one uplink component carrier that carries the PUCCH, the control module 20 may determine a second TPC index according to the RRC reconfiguration or the transmission on the PDCCH, associate the TPC-PUCCH-RNTI with the second TPC index, and decode the PUCCH power control information using the TPC-PUCCH-RNTI and the associated second TPC index.

In Step S612, the communication module 22 transmits the uplink channels on the plurality of uplink component carriers according to the plurality of transmit powers of the uplink channels. The control module 20 may apply the same path loss to the PUSCH and PUCCH on one uplink channel. The communication module 22 may transmit the PUSCH on one corresponding uplink component carrier according to the adjusted transmit power for non-adaptive retransmission, Sounding Reference Signal (SRS) transmission, Semi-Persistent Scheduling (SPS) transmission, or quick power adjustment.

In Step S614, the communication method 6 is completed and exited.

The communication method 6 provides an exemplary power control mechanism for multiple component carriers in the LTE/LTE-A network system.

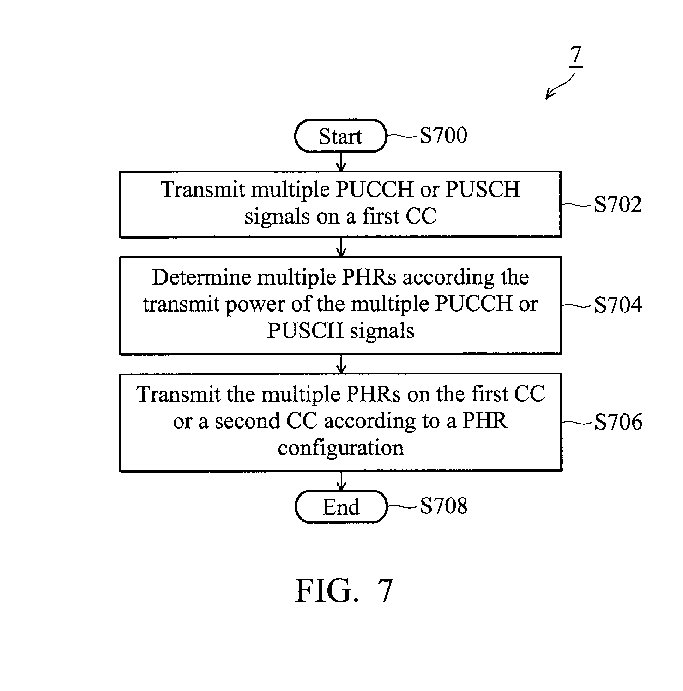

FIG. 7 is another exemplary flowchart of a communication method 7 according to the invention, incorporated in the wireless communication device 2 in FIG. 2.

In Step S700, the wireless communication device 2 is initiated to perform transmissions in the PUCCH or the PUSCH upon start of the communication method 7.

In Step S702, the communication module 22 transmits multiple uplink signals (PUCCH or PUSCH signals) on one or more uplink component carrier according to one or more physical resource (PUCCH resource or PUSCH resource), orthogonal sequence, or sequence pattern. The uplink signals may be PUCCH or PUSCH signals. The uplink signals may be transmitted to the base station according to a time/frequency bundling technology, channel selection technology, multi-sequence technology, or joint coding technology. The communication module 22 may receive an RRC signaling or a UE specific signaling to configure the one or more physical resource, orthogonal sequence, or sequence pattern, thereby transmitting the multiple uplink signals according thereto. The PUCCH resource comprises a physical resource block, an orthogonal code, a cyclic time shift scheme, or a PUCCH region. The communication module 22 may transmit the plurality of PUCCH signals in the physical resource block.

In Step S704, the control module 20 determines multiple power headroom reports (PHRs) for one or more uplink component carrier according the transmit power of the multiple uplink signals. For example, the control module 20 determines a plurality of PUCCH PHRs corresponding to PUCCH transmissions on a plurality of uplink component carriers. The control module 20 may determines a separate PUCCH PHR for each PUCCH transmission on any uplink component carrier. The control module 20 may also determines a combined PUCCH PHR for all PUCCH transmissions on any uplink component carrier. The control module 20 may determines a separate PUCCH PHR or PUSCH PHR for each PUCCH transmission and PUSCH transmission on any uplink component carrier. The control module 20 may also determines a combined PHR for all PUCCH transmissions and PUSCH transmissions on any uplink component carrier. The content of the power headroom report may comprise a difference between the maximum allowed transmission power and the allocated power, either a total value or a value per resource block, or the allocated power, either a total value or a value per resource block. Accordingly, the communication device 2 selects the maximum allowed transmission power from the predetermined power range in some embodiments, the selected maximum allowed transmission power (upper limit power) may be included in the power headroom report. In one embodiment, the control module 20 determines a separate PHR for each PUCCH transmission signal on each uplink component carrier, thereby deriving the multiple PUCCH PHRs for reporting to the base station. In another embodiment, the control module 20 determines multiple PUCCH PHRs for each PUCCH transmission, then incorporates the multiple PUCCH PHRs to provide an incorporated PHR. Since multiple PUCCH PHRs or an incorporated PHR is/are reported, a new PUCCH format capable of holding the multiple PUCCH PHRs or the incorporated PHR may be defined for the PHR transmission. The PUCCH PHR may be computed by the control module 20 with respect to a PUCCH resource comprising the physical resource block, the orthogonal code, the cyclic (time) shift scheme, or the PUCCH region.

The determination of the PHR for transmissions on one or more uplink component carrier may be triggered according to a PHR configuration specific to each uplink component carrier. The PHR configuration may comprise a periodic timer, a DL path loss change parameter, a PHR prohibit timer, or a PHR reconfiguration event. All PHR configurations are configured by higher layer signaling including the RRC signaling or an UE specific signaling. The communication module 22 receives the PHR configuration from the EUTRAN. In one embodiment, the communication module 22 reports a PUCCH-only PHR on the uplink component carrier that carries the PUCCH transmission. In another embodiment, the communication module 22 reports a PUCCH PHR, a PUSCH PHR, or both on the uplink component carrier that carries the PUCCH and the PUSCH transmissions.

In Step S706, the communication module 22 transmits the multiple PHRs on the uplink component carrier that carries the PUCCH or a second component carrier according to a PHR configuration. In one embodiment, the control module 20 computes a separate PUCCH PHR for each PUCCH transmission, so that the communication module 22 can report the separate PUCCH PHR on the uplink component carrier that carries each PUCCH transmission. In another embodiment, the communication module 22 may transmit the incorporated PHR on any uplink component carrier that carries the PUCCH transmission or a second uplink component carrier. The PHR configuration comprises a periodic timer, a DL path loss change parameter, a PHR prohibit timer, or a PHR reconfiguration event.

In Step S708, the communication method 7 is completed and exited.

The communication method 7 provides an exemplary PHR reporting mechanism for multiple component carriers in the LTE/LTE-A network system.

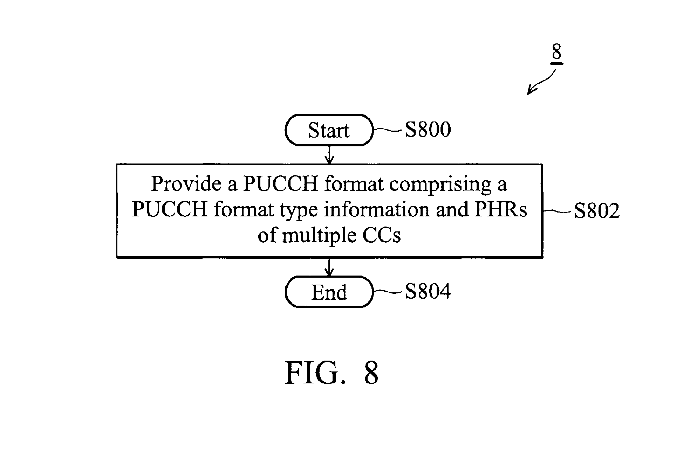

FIG. 8 is another exemplary flowchart of a communication method 8 according to the invention, incorporated in the wireless communication device 2 in FIG. 2.

In Step S800, the wireless communication device 2 is initiated to provide a PUCCH format upon start of the communication method 8.

In Step S802, the control module 20 provides the PUCCH format comprising a PUCCH format type information and PHRs of at least two component carriers. For example, the PUCCH format can hold PHRs for up to 5 component carriers, informed at the PUCCH format type information field. The PUCCH format may also comprise ACK/NACK signaling and channel quality indicators of the at least two component carriers

In Step S804, the communication method 8 is completed and exited.

The communication method 8 provides an exemplary PUCCH format type in the LTE/LTE-A network system, thereby delivering PHRs of the multiple component carriers across uplink channels.

Upon receiving a PDSCH signal, the communication device 2 is required to respond an ACK/NACK signaling, a Channel Quality Indicator (CQI), a Scheduling Request (SR), or other information to the EUTRAN in the PUCCH. In the present invention, when the communication module 22 receives multiple PDSCH signals, multiple PUCCH signals comprising the ACK/NACK signaling, the Channel Quality Indicator (CQI), the Scheduling Request (SR), or the other information are responded to the EUTRAN accordingly. The PUCCH resource is used to transmit the multiple PUCCH signals according to a specific configuration parameter specific to the telecommunication device, a predetermined carrier offset relative to a predetermined downlink carrier, a received PDCCH resource, a bandwidth of the first carrier, a PUCCH format type, a cell configuration, an orthogonal hopping sequence, or a cyclic shift pattern. For example, when the communication module 22 receives two PDSCH signals, consequently two ACK/NACK signaling are responded in the PUCCH to the EUTRAN. The control module 20 determines a first PUCCH resource for the first ACK/NACK signaling according to the received PDSCH, and the communication module 22 transmits the first ACK/NACK signaling by the first PUCCH resource. The control module 20 then determines a second PUCCH resource for the second ACK/NACK signaling in relation to the first PUCCH resource by a predetermined offset, so that the communication module 22 can transmit the second ACK/NACK signaling by the first PUCCH resource.

In LTE-A, Carrier aggregation is introduced where cross-carrier scheduling/assignment and asymmetric component carrier (CC) configuration is possible. For a user equipment (UE), different PDCCH formats (and its own content) may be used by PDCCHs on different DL component carriers for PDSCH or PUSCH transmissions (e.g. concurrently) using different transmission modes (e.g. due to PDCCH formats) on the same or different downlink (DL) or uplink (UL) component carriers (e.g. due to cross carrier scheduling or asymmetric aggregation), which further may be on the same or different component carriers of the received PDCCHs (respectively) (e.g. due to cross carrier scheduling). Since different transmission modes for PUSCHs/PDSCHs on the same CC is possible, consideration on TPC command of power control (for PUSCHs/PDSCHs) and power headroom report (only for PUSCHs) should be taken.

In one embodiment of the present invention, a UE can use the same or different PDCCH formats (and its own content) by PDCCHs on different DL component carriers for PDSCH or PUSCH transmissions (e.g. concurrently). The PDSCH or PUSCH transmissions use the same or different transmission modes (e.g. due to PDCCH formats) on the same or different DL or UL component carriers (e.g. due to cross carrier scheduling or asymmetric aggregation). The PDSCH transmission further can be on the same or different component carriers of the received PDCCHs (respectively) (e.g. due to cross carrier scheduling) by the UE. Different DL component carriers can carry the same or different PDCCH formats with the same or different sets of TPC commands for the same or different PDSCH(s), PUSCH(s) and/or PUCCH(s), or carry the same or different PDCCH formats with the same or different TPC commands for the same or different PDSCH(s), PUSCH(s) and/or PUCCH(s). For PUSCH(s) and/or PUCCH(s) on the same UL component carrier, individual power headroom report (PHR) for each PUSCH and/or PUCCH are calculated to form the PHR report. The PHR report includes at least one field to indicate the PUCCH format, PUSCH transmission mode, and/or component carrier.

In another embodiment of the present invention, for a carrier aggregation configuration (e.g. UL/DL asymmetric configuration) to a UE, according to PDCCH format in a first DL component carrier, the UE can apply PUCCH power control for a first PUCCH on a first UL component carrier which is not paired/configured with the first DL component carrier, or for a second PUCCH on a second UL component carrier which is paired/configured with a second DL component carrier, or for a third PUCCH on a second UL component carrier which is paired/configured with the first DL component carrier.

In another embodiment of the present invention, for a carrier aggregation configuration (e.g. UL/DL asymmetric configuration) to a UE, according to PDCCH format in a first DL component carrier, the UE can apply PUSCH power control for a first PUSCH on a first UL component carrier which is not paired/configured with the first DL component carrier, or for a second PUSCH on a second UL component carrier which is paired/configured with a second DL component carrier, or for a third PUSCH on a second UL component carrier which is paired/configured with the first DL component carrier.

In LTE, PDCCH format 3/3A is restricted to have the same payload size as PDCCH format 0/1A. In LTE-A, for PDCCH format 3/3A cross carrier power control, at least one carrier indicator (e.g. CIF of 3 bits) may be added in the PDCCH format 3/3A. If PDCCH format 0/1A and format 3/3A always expend together with CIF, then more blind decoding attempts are needed for possible format sizes, even when PDCCH format 0/1A doesn't provide cross carrier scheduling (e.g. there is only one UL CC or DL CC). If format 0/1A size is not changed, then format 3/3A TPC command capability (e.g. number of TPC command available) is reduced. On the other hand, new scheme for format 3/3A cross carrier power control for PUCCH/PUSCH could be considered. For, adding odd number of CIF(s) could possibly add more unused bit(s) for the case of format 3 of 2-bit TPC command.

In one embodiment of the present invention, PDCCH format 3/3A can include one or more CIF fields in the format payload. PDCCH format 3/3A can have different size from PDCCH format 1/1A on a DL component carrier. The size of PDCCH format 3/3A size can be larger or smaller than the size of PDCCH format 0/1A according to number of CIF fields.

In another embodiment of the present invention, A UE is configured (e.g. by higher layer signaling such as RRC signaling) with one TPC-PUCCH-RNTI and/or at least one TPC-PUSCH-RNTI as well as one or more (at least one) TPC-index (indices) for UL power control (e.g. PUCCH or PUSCH) by PDCCH format 3/3A. TPC-index (indices) or TPC-PUSCH-RNTI(s) is (are) component carrier specific (e.g. an uplink component carrier) where each TPC-index or TPC-PUSCH-RNTI is mapped to a specific/separate component carrier (e.g. no overlap, no two TPC-indices/TPC-PUSCH-RNTIs can be mapped to the same component carrier). Same path loss is applied to PUCCH and PUSCH on the same UL component carrier. Only one pair/association of TPC-PUCCH-RNTI and TPC-index relation for a configured component carrier (e.g. by PDCCH or higher layer signaling, such as RRC signaling). Only one UL component carrier is used to transmit PUCCH. When a UL component carrier for transmitting PUCCH is (re)configured, a corresponding TPC-index (e.g. another TPC-index from the one before reconfiguration) of the UL component carrier is linked to TPC-PUCCH-RNTI as a pair/association. When the UE detects PDCCH format 3/3A addressed by the TPC-PUCCH-RNTI, the UE uses the corresponding/paired TPC-index to get the TPC command in the format 3/3A (e.g. for PUCCH power control on the component carrier mapped by TPC-index). If both number of TPC-PUSCH-RNTI and TPC-index are one or more than one, the number of TPC-PUSCH-RNTIs is the same as the number of TPC-indices, and the TPC-PUSCH-RNTI and the TPC-index are paired/associated for a UL component carrier. Each pair/association of TPC-PUSCH-RNTI and TPC-index is used to apply power control (e.g. by reading format 3/3A to get TPC command indexed by TPC-index) for non-adaptive retransmission, SRS transmission, SPS transmission, or quick power adjustment by PUSCH(s) on the associated component carrier. When the UE detects PDCCH format 3/3A addressed by a TPC-PUSCH-RNTI (e.g. one of TPC-PUSCH-RNTIs), the UE uses pair/corresponding TPC-index to get TPC command in the PDCCH format 3/3A (e.g. for PUSCH power control on the paired/associated UL component carrier). Only one TPC-PUSCH-RNTI is configured for the UE paired/associated with one or more TPC-index (indices). There is only one SPS configuration at UL (e.g. only one configured component carrier for SPS). When UE detects PDCCH format 3/3A addressed by the only TPC-PUSCH-RNTI, the UE uses one or more TPC-index (indices), each associated with an active UL component carrier(s) (e.g. any possible UL component carrier(s) with UL transmission activity), to get one or more TPC commands in the format 3/3A for power control of PUSCH(s) on related one or more active UL component carriers (e.g. each TPC command is applied to PUSCH power control on related UL component carrier). PUSCH on the associated component carrier is for non-adaptive retransmission, SRS transmission, and/or SPS transmission. Format 3/3A is for power control of non-adaptive retransmission, SRS transmission, SPS transmission by PUSCH(s) and/or quick power adjustment on PUSCH(s).

In another embodiment of the present invention, a UE is configured (e.g. by higher layer signaling such as RRC signaling) with one TPC-PUCCH-RNTI and/or at least one TPC-PUSCH-RNTI as well as one TPC-index (indices) for UL power control (e.g. PUCCH or PUSCH power control) by PDCCH format 3/3A. One or more TPC-PUSCH-RNTIs are paired/associated with the only one TPC-index. TPC-PUSCH-RNTI(s) is (are) component carrier specific (e.g. an uplink component carrier) where each TPC-PUSCH-RNTI is mapped to a specific/separate component carrier (e.g. no overlap, no two TPC-PUSCH-RNTIs can be mapped to the same component carrier). All UL component carrier shares the same TPC-index and power control with the same TPC command is applied. When the UE detects PDCCH format 3/3A addressed by one or more TPC-PUSCH-RNTIs, the UE uses the common TPC-index to get a TPC command in PDCCH format 3/3A (e.g. for power control of PUSCH(s) on component carrier(s) associated with the TPC-PUSCH-RNTI(s)).

According to possible PUCCH transmission format and possible schemes (e.g. bundling, channel selection, multi-sequence, or joint coding), there could be multiple PUCCH signals on one UL CC. If so, there should be multiple PUCCH PHR for PUCCH signals on a UL CC. In addition, PHR may trigger on different CCs with each own PHR configuration, but PHR report only include PUCCH and/or PUSCH PHR in the same CC.

In one embodiment of the present invention, when multiple PUCCH signals/sequences/patterns/resources are/were transmitted on a first UL component carrier (CC), multiple PUCCH PHRs for PUCCH signals/sequences/patterns/resources are included, combined, considered, or separately transmitted on the first UL CC or a second UL CC. Each/individual PUCCH PHR for each PUCCH signal/sequence/pattern/resource is constructed for PHR reporting. PUCCH PHR for each PUCCH signal/sequence/pattern/resource is combined in a composite PUCCH PHR for PHR reporting.

In another embodiment of the present invention, different/separate PHRs may be triggered on different component carriers with each own PHR configuration (e.g. individual PHR is triggered on each own component carrier according to PHR configuration of each own component carrier). PHR reporting on a component carrier (CC) only includes PUCCH PHR(s) and/or PUSCH PHR(s) for PUCCH and/or PUSCH transmission (e.g. could be in the same or different subframes) in the same component carrier. PHR reporting is component carrier specific. The PHR configuration includes PHR periodic timer, DL path loss change parameter, PHR prohibit timer and/or PHR (re)configuration event. PHR reporting on a component carrier (CC) includes PUCCH PHR(s) and/or PUSCH PHR(s) for PUCCH and/or PUSCH transmission (e.g. could be in the same or different subframes) in the same component carrier and/or another component carrier.

In case multiple PUCCH resources (e.g. time/frequency/CC, orthogonal codes and/or cyclic time shift, and/or PUCCH regions) are used by a UE in a subframe for transmission of multiple PUCCHs on the same or different PRBs, multiple PUCCH PHRs should be needed because different PUCCH formats/resources may be used. Or if multiple PUCCHs are transmitted on the same PRB, then on PUCCH PHR should be considered for simplicity.

In one embodiment of the present invention, when multiple PUCCH resources (e.g. time/frequency/CC, orthogonal codes and/or cyclic time shift, and/or PUCCH regions) are used by a UE in a subframe/slot for transmission of multiple PUCCHs on the same or different PRBs on the same or another component carrier, multiple PUCCH PHRs are included, combined, considered, or separately transmitted on the same or another component carrier. Each/individual PUCCH PHR for each PUCCH signal/sequence/pattern/resource e.g. time/frequency/CC, orthogonal codes and/or cyclic time shift, and/or PUCCH regions) is constructed for PHR reporting. PUCCH PHR for each PUCCH signal/sequence/pattern/resource e.g. time/frequency/CC, orthogonal codes and/or cyclic time shift, and/or PUCCH regions) is combined in a composite PUCCH PHR for PHR reporting. Different PUCCH format(s) or resource(s) can be used. PUCCH resource is configured by higher layer signaling (e.g. RRC signaling or UE specific signaling). Single/combined PHR is used if transmission of multiple PUCCHs is on the same PRB (e.g. physical resource block).

In another embodiment of the present invention, new PUCCH format (e.g. different format from LTE) for PUCCH PHR report is defined and the new format includes at least one field indicating PUCCH format being used. New PUCCH format is for multiplexing of ACK/NACL for multiple CCs, or CQI reporting.

In yet another embodiment of the present invention, PUCCH(s) on a UE specific UL CC for CQI, SR, ACK/NACK for all DL CCs, where the PUCCH source should be used depends on UE specific configuration parameters, and/or DL CC specific offset (e.g. compared to a DL CC), and/or received PDCCH resources, and/or UL CC bandwidth, and/or PUCCH format, and/or cell specific configuration, and/or orthogonal sequence hopping/cyclic shift pattern.

As used herein, the term "determining" encompasses calculating, computing, processing, deriving, investigating, looking up (e.g., looking up in a table, a database or another data structure), ascertaining and the like. Also, the term "determining" may include resolving, selecting, choosing, establishing and the like.

The various illustrative logical blocks, modules and circuits described in connection with the present disclosure may be implemented or performed with a general purpose processor, a digital signal processor (DSP), an application specific integrated circuit (ASIC), a field programmable gate array signal (FPGA) or other programmable logic device, discrete gate or transistor logic, discrete hardware components or any combination thereof designed to perform the functions described herein. A general purpose processor may be a microprocessor, but in the alternative, the processor may be any commercially available processor, controller, microcontroller or state machine.

The operations and functions of the various logical blocks, modules, and circuits described herein may be implemented in circuit hardware or embedded software codes that can be accessed and executed by a processor.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A method for a communication device, comprising being configured with at least one uplink carrier and at least one downlink carrier according to a carrier aggregation configuration;
receiving, by the communication device, at least one control signal at at least
one downlink control channelon the at least one downlink carrier;
determining, by the communication device, at least one control format of the
at least one control signal for at least one of at least one uplink and at least one downlink transmission or for at least one control signaling carried on the same or different at least one uplink carrier or the at
least one downlink carrier; and
performing, by the communication device, at least one of the at least one
uplink and the at least one downlink transmission or at least one control signalingon the same or different at least one uplink carrier or
the at least one downlink carrier according to the at least one control format of the at least one control signal;
wherein the at least one of at least one uplink and the at least one downlink
transmission or the at least one control signaling use a same or different transmission modes on the same or different at least one uplink carrier or the at least one downlink carrier.

2. The method as claimed in claim 1, wherein
the at least one control signal are a plurality of control signals, and the
plurality of control signals comprise the same or different control formats and are carried on the same or different downlink carriers; and
the at least one downlink carrier that carries the at least one control signal and
the at least one uplink carrier or the at least one downlink carrier that carries the at least one of at least one uplink and at least one downlink transmission or the at least one control signaling is the same or different.

3. The method as claimed in claim 1, wherein the control format comprises resource allocation, modulation, coding scheme, a carrier indication field (CIF), or a transmit power control (TPC) command of the at least one of at least one uplink and at least one downlink transmission.

4. The method as claimed in claim 1, wherein the at least one of at least one uplink and downlink transmission or the at least one control signaling is on a physical downlink shared channel (PDSCH), a physical uplink shared channel (PUSCH), or a physical uplink control channel (PUCCH).

5. The method as claimed in claim 1, wherein the control information comprises at least one transmit power control (TPC) command of the at least one of at least one uplink and downlink transmission or the at least one control signaling, and the method further comprises:
the communication device adjusting power of the at least one of at least one uplink and at least one downlink transmission or the at least one control signaling according to a set of TPC commands of the at least one TPC command or a TPC command of the at least one TPC command.

6. The method as claimed in claim 5, wherein the adjusting step comprises:
the communication device adjusting the power according to a TPC command on a configured downlink carrier, a TPC command on a downlink carrier with configured priority, or a TPC command on a mandated downlink carrier.

7. The method as claimed in claim 1, further comprising:
determining, by the communication device, at least one power headroom report comprising power headroom information for at least one of the at least one uplink transmission and the at least one control signaling on the same at least one uplink carrier or determining at least one power headroom report comprising power headroom information for the at least one uplink transmission; wherein each of the at least one power headroom report comprises at least one field indicating a PUCCH format, a PUSCH transmission mode, or a carrier.

8. The method as claimed in claim 1, wherein the at least one downlink carrier comprises a first downlink carrier and a second downlink carrier, the at least one uplink carrier comprises a first uplink carrier, and the method further comprises:
receiving, by the communication device, the carrier aggregation configuration indicating the first uplink carrier is paired with the second downlink carrier different from the first downlink carrier;
wherein the receiving the at least one control signal comprises receiving the at least one control signal on the first downlink carrier;
the determining step comprises determining the at least one control format of the at least one control signal for the at least one uplink transmission or the at least one control signaling on the first uplink carrier, or for the at least one downlink transmission on one of the at least one downlink carrier; and
the first uplink carrier carries the at least one control signaling on at least one physical uplink control channel (PUCCH) or the at least one uplink transmission on at least one physical uplink shared channel (PUSCH);
the method further comprises adjusting, by the communication device, power of the least one control signaling or the at least one uplink transmission according to the at least one control format; and transmitting, by the communication device, the at least one control signaling or the at least one uplink transmission on the first uplink carrier according to the adjusted power.

9. The method as claimed in claim 1, wherein the at least one downlink carrier comprises a first downlink carrier and a second downlink carrier, the at least one uplink carrier comprises a second uplink carrier, and the method further comprises:
receiving, by the communication device, the carrier aggregation configuration indicating the second uplink carrier is paired with at least one of the first and second downlink carriers;
wherein the receiving the at least one control signal step comprises receiving the at least one control signal on the first or the second downlink carrier;
the determining step comprises determining the at least one control format of the at least one control signal for the at least one uplink transmission or the at least one control signaling on the second uplink carrier, or for the at least one downlink transmission on one of the at least one downlink carrier; and
the second uplink carrier carries the at least one control signaling on at least one physical uplink control channel (PUCCH) or the at least one uplink transmission on at least one physical uplink shared channel (PUSCH);
the method further comprises adjusting, by the communication device, power of the least one control signaling or the at least one uplink transmission according to the at least one control format; and transmitting, by the communication device, the at least one control signaling or the at least one uplink transmission on the second uplink carrier according to the adjusted power.

10. A method, comprising:
receiving, by a communication device, a control signal comprising at least one carrier indication field (CIF) on a downlink control channel on a downlink carrier;
decoding, by the communication device, the control signal with a Transmit Power Control Radio Network Temporary Identity (TPC-RNTI); and
determining, by the communication device, the decoded control signal as a PDCCH formats 3 or 3A when a data size of the decoded control signal equals to a predetermined data size.

11. The method as claimed in claim 10, comprising:
determining, by the communication device, the control signal as being in a PDCCH formats 0 or 1A when a data size of the decoded control signal is different from the predetermined data size or according to a number of CIF fields.

12. A method for a communication device, comprising:
being configured with at least one uplink carrier and at least one downlink carrier according to a carrier aggregation configuration;
being configured with a transmit power control PUCCH RNTI (TPC-PUCCH-RNTI), a PUCCH TPC index, at least one TPC-PUSCH-RNTI, and at least one PUSCH TPC index;
receiving, by the communication device, at least one control signal on at least one downlink control channel;
decoding, by the communication device, at least one control signal with the TPC-PUCCH-RNTI, the PUCCH TPC index, the at least one TPC-PUSCH-RNTI, and the at least one PUSCH TPC index to obtain at least one TPC command corresponding to the at least one uplink carrier; and
adjusting, by the communication device, at least one transmit power of the at least one uplink carrier that carry uplink channelsaccording to the at least one TPC command.

13. The method as claimed in claim 12, wherein the decoding step comprises:
detecting, by the communication device, the at least one control signal with the TPC-PUCCH-RNTI to generate at least one control format; and determining, by the communication device, a TPC command corresponding to one of the at least one uplink carrier according to the at least one control format and the PUCCH TPC index.

14. The method as claimed in claim 12, wherein the at least one TPC-PUSCH-RNTI is only one TPC-PUSCH-RNTI, and the decoding step comprises:
detecting, by the communication device, the at least one control signal with the only one TPC-PUSCH-RNTI to generate at least one control format, and
determining, by the communication device, at least one TPC command corresponding to the at least one uplink carrier according to the at least one control format and the at least one PUSCH TPC index.

15. The method as claimed in claim 12, wherein decoding step comprises:
receiving, by the communication device, an association configuration comprises a subset of the at least one TPC-PUSCH-RNTI and a subset of the at least one PUSCH TPC index associated therewith;
detecting, by the communication device, at least one control signal with the at least one TPC-PUSCH-RNTI or the subset of the at least one TPC-PUSCH-RNTI to generate at least one control format; and
determining , by the communication device, at least one PUSCH TPC command corresponding to the at least one uplink carrier or a subset of at least one PUSCH TPC command corresponding to a subset of the at least one uplink carrier according to the at least one control format and the subset of the at least one PUSCH TPC index associated with the subset of the TPC-PUSCH-RNTI.

16. The method as claimed in claim 12, wherein the at least one PUSCH TPC index is only one PUSCH TPC index, and the decoding step comprises:
detecting, by the communication device, at least one control signal with the at least one TPC-PUSCH-RNTI or a subset of the at least one TPC-PUSCH-RNTI to generate at least one control format; and
determining , by the communication device, a subset of at least one PUSCH TPC command corresponding to a subset of the at least one uplink carrier or at least one PUSCH TPC command corresponding to the at least one uplink carrier according to the at least one control format and the only one PUSCH TPC index.

17. The method as claimed in claim 12, wherein the uplink channels comprise at least one of at least one PUSCH and a PUCCH.

18. The method as claimed in claim 12, wherein the at least one TPC-PUSCH-RNTI or the at least one PUSCH TPC index is only specific to one of the at least one uplink carrier or is specific to a group of the at least one uplink carrier.

19. The method as claimed in claim 17, further comprising the communication device applying the same path loss to at least one of at least one PUSCH and at least one PUCCH on a same uplink carrier or on uplink carriers of a same power control group.

20. The method as claimed in claim 12, further comprising:
receiving, by the communication device, a configuration comprising the TPC-PUCCH-RNTI and the PUCCH TPC index from either the control channel or a radio resource control (RRC) signal; and
associating, by the communication device, the received TPC-PUCCH-RNTI and the PUCCH TPC index for an uplink carrier of the at least one uplink carrier in the decoding step.

21. The method as claimed in claim 12, wherein only one of the at least one uplink carrier carries a PUCCH signaling.

22. The method as claimed in claim 21, further comprising:
receiving, by the communication device, a reconfiguration of the only one uplink carrier that carriers the PUCCH signaling;
determining, by the communication device, a second PUCCH TPC index according to the reconfiguration; and
associating, by the communication device, the received TPC-PUCCH-RNTI and the second PUCCH TPC index in the decoding step.

23. The method as claimed in claim 12, wherein the decoding step comprises decoding, by the communication device, one of the at least one control signal with the TPC-PUCCH-RNTI and the associated PUCCH TPC index to obtain a PUCCH TPC command.

24. The method as claimed in claim 12, wherein a number of the at least one TPC-PUSCH-RNTI equals to a number of the at least one TPC index.

25. The method as claimed in claim 12, further comprising:
receiving, by the communication device, a configuration comprising the at least one TPC-PUSCH-RNTI and the at least one PUSCH TPC index from either the control channel or a radio resource control (RRC) signal; and
associating, by the communication device, the at least one TPC-PUSCH-RNTI with the at least one PUSCH TPC index respectively.

26. The method as claimed in claim 24, wherein one of the at least one TPC-PUSCH-RNTI and one of the at least one PUSCH TPC index are paired or associated for an uplink carrier of the at least one uplink carrier, wherein each uplink carrier of the at least one uplink carrier has only one unique pair or association of a TPC-PUSCH-RNTI of and a PUSCH TPC index or wherein a number of pairs equals to a number of the at least one uplink carrier.

27. The method as claimed in claim 24, wherein:
the decoding step comprises decoding, by the communication device, at least one of the at least one control signal with the at least one TPC-PUSCH-RNTI and the associated at least one PUSCH TPC index to obtain at least one of the at least one PUSCH TPC command, or decoding one of the at least one control signal with one of the at least one TPC-PUSCH-RNTI and the associated PUSCH TPC index of the at least one PUSCH TPC index to obtain a PUSCH TPC command;
the adjusting step comprises adjusting, by the communication device, at least one of the at least one transmit power to corresponding at least one of the at least one uplink carrier that carries PUSCH channel according to at least one of the at least one PUSCH TPC command, or adjusting one of the at least one transmit power to the corresponding one of the at least one uplink carrier that carries PUSCH channel according to one of the at least one PUSCH TPC command; and
the method further comprises transmitting, by the communication device, on PUSCH of each corresponding uplink carrier for non-adaptive retransmission, Sounding Reference Signal (SRS) transmission, Semi-Persistent Scheduling (SPS) transmission, or quick power adjustment according to each adjusted transmit powers or power control of each corresponding PUSCH TPC command..

28. The method as claimed in claim 12, wherein:
the being configured with the at least one TPC-PUSCH-RNTI and the at least one PUSCH TPC index step comprises being configured with only one TPC-PUSCH-RNTI and a plurality of PUSCH TPC indexes; and
associating, by the communication device, the configured TPC-PUSCH-RNTI with the plurality of PUSCH TPC indexes.

29. The method as claimed in claim 12, wherein only one of the at least one uplink carrier provides Semi-Persistent Scheduling.

30. The method as claimed in claim 27, wherein each of the plurality of PUSCH TPC indexes is associated with an active uplink carrier in the at least one uplink carrier or is associated with one of the at least one uplink carrier.

31. The method as claimed in claim 12, wherein the communication device only applies a PUSCH TPC index to obtain a PUSCH TPC command for an active carrier.

32. The method as claimed in claim 12, wherein:
the being configured with the TPC-PUCCH-RNTI, the PUCCH TPC index, the at least one TPC-PUSCH-RNTI and the at least one TPC index step comprises being configured with the TPC-PUCCH-RNTI, the PUCCH TPC index, the at least one TPC-PUSCH-RNTI and only one TPC index; and
the method further comprises associating, by the communication device, the configured at least one TPC-PUSCH-RNTI with the only one PUSCH TPC index.

33. The method as claimed in claim 31, wherein the each of the at least one TPC-PUSCH-RNTI is carrier specific and maps to one of the at least one uplink carrier.

34. The method as claimed in claim 31, the at least one uplink carrier shares the only one TPC index or a same PUSCH TPC command is applied to each uplink carrier corresponding to a detected TPC-PUSCH-RNTI.

35. The method as claimed in claim 31, wherein:
the decoding step comprises decoding the at least one control signal with the at least one TPC-PUSCH-RNTI to derive at least one control format, and using the at least one control format and the only one TPC index to obtain at least one TPC command corresponding to the at least one uplink carrier.

36. A method for a communication device, comprising:
transmitting, by the communication device, at least one uplink control signal on at least one uplink carrier;
determining, by the communication device, at least one power headroom report (PHR) according to at least one transmit power of the at least one uplink control signal; and
transmitting, by the communication device, the at least one power headroom report on the at least one uplink carrier , on one of the at least one uplink carrier, or on a first uplink carrier.

37. The method of claim 35, wherein the at least one uplink control signal uses at least one of at least one sequence, at least one pattern and at least one resource for signaling.

38. The method of claim 35, wherein the at least one power headroom report is included or combined in a first power headroom report before being transmitted on the at least one uplink carrier, on one of the at least one uplink carrier, or on a first uplink carrier.

39. The method of claim 35, wherein:
the determining step comprises determining a PHR for each of the at least one uplink control signal.

40. The method of claim 35, further comprising:
incorporating, by the communication device, all of the least one power headroom report to provide an incorporated power headroom report; and
wherein the transmitting the at least one power headroom reports step comprises transmitting the incorporated power headroom report.

41. The method of claim 35, wherein:
the transmitting the at least one uplink control signals step comprises transmitting the at least one uplink control signals according to a PUCCH resource comprising a physical resource block, an orthogonal code, a cyclic time shift scheme, or a PUCCH region; and
the determining step comprises determining the at least one power headroom report according to the transmit power of the at least one of uplink control signals employing the physical resource block, the orthogonal code, the cyclic time shift scheme, or the PUCCH region

42. The method of claim 40, further comprises transmitting the at least one power headroom reports in one new PUCCH format.

43. The method of claim 40, further comprising receiving an RRC signaling or a UE specific signaling to configure the PUCCH resource.

44. The method of claim 40, wherein:
the transmitting the at least one uplink control signal step comprises transmitting the at least one uplink control signal in the physical resource block;
the determining step comprises determining at least one power headroom report according to the at least one transmit power of the at least one uplink control signal;
the method further comprises incorporating, by the communication device, the at least one power headroom report together to provide an incorporated power headroom report; and
the transmitting the at least one power headroom reports step comprises transmitting the incorporated power headroom report.

45. The method of claim 40, wherein:
the transmitting the at least one uplink control signal step comprises transmitting the at least one uplink control signal according to at least one PUCCH resource comprising at least one of a physical radio resource, a physical resource block, an uplink carrier, an orthogonal code, a cyclic time shift of a base sequence, a PUCCH format, and a PUCCH region; and
the determining step comprises determining the at least one power headroom report according to the at least one transmit power of the at least one uplink control signal employing at least one of the physical radio resource, the physical resource block, the uplink carrier, the orthogonal code, the cyclic time shift of the base sequence, the PUCCH format, and the PUCCH region.

46. The method of claim 44, further comprises transmitting the at least one power headroom reports in one new PUCCH format.

47. The method of claim 44, further comprising receiving an RRC signaling or a UE specific signaling to configure the at least one PUCCH resource.

48. The method of claim 44, wherein:
the transmitting the at least one uplink control signal step comprises transmitting the at least one uplink control signal in the physical resource block;
the determining step comprises determining at least one power headroom report according to the at least one transmit power of the at least one uplink control signal;
the method further comprises incorporating, by the communication device, the at least one power headroom report together to provide an incorporated power headroom report; and
the transmitting the at least one power headroom reports step comprises transmitting the incorporated power headroom report.

49. A method for a communication device, comprising:
the communication device being configured with at least one uplink carrier according to a carrier configuration; and
triggering to determine a power headroom report for each of the at least one uplink carrier according to a PHR configuration of each of the at least one uplink carrier.

50. The method of claim 48, further comprising:
transmitting, by the communication device, at least one of at least one uplink signal and at least one control signal on the at least one uplink carrier; and
triggering, by the communication device, to determine at least one power headroom report (PHR) for the at least one uplink carrier according to the PHR configuration of each of the at least one uplink carrier or at least one carrier-specific PHR configuration;
wherein the PHR configuration of each of the at least one uplink carrier comprises a triggering mechanism to be used in the triggering step for each of the at least one uplink carrier, or each of the at least one uplink carrier is configured with each own PHR triggering configuration.

51. The method of claim 48, wherein the at least one of at least one uplink signal and at least one control signal comprise at least one of at least one PUSCH signal and at least one PUCCH signal; and
the method further comprises reporting each of the at least one power headroom report of the at least one of at least one PUSCH signal and at least one PUCCH signal transmitted on the at least one uplink carrier on a uplink carrier carrying at least one of a PUSCH signal and a PUCCH signal, wherein power headroom information of the at least one of a PUSCH signal and a PUCCH signal is reported on the uplink carrier.

52. The method of claim 48, further comprising:
performing at least one of a PUCCH transmission and a PUSCH transmission on a first uplink carrier of the at least one uplink carrier; and reporting only on the first uplink carrier the power headroom report that includes at least one of a PUCCH PHR for the PUCCH transmission and a PUSCH PHR for the PUSCH transmission on the first uplink carrier, or reporting on a second uplink carrier the power headroom report that includes at least one of a PUCCH PHR for the PUCCH transmission and a PUSCH PHR for the PUSCH transmission on the first uplink carrier, or reporting on a third uplink carrier the power headroom report that includes at least one of a PUCCH PHR for the PUCCH transmission on the first uplink carrier and a PUSCH PHR for the PUSCH transmission on the third uplink carrier.

53. The method of claim 48, wherein the power headroom report is specific to each uplink carrier or power headroom reporting is uplink carrier-specific.

54. The method of claim 48, wherein the PHR configuration comprises at least one of a periodic timer, a DL path loss change parameter, a PHR prohibit timer, a carrier indication and a PHR reconfiguration event.

55. The method of claim 48, wherein the at least one uplink carrier comprises a first uplink carrier and a second uplink carrier, and the method further comprising:
performing a PUCCH transmission or a PUSCH transmission on the first uplink carrier of the at least one uplink carrier; and
reporting the power headroom report that includes a PUCCH PHR for the PUCCH transmission or a PUSCH PHR for the PUSCH transmission on the second uplink carrier.

56. A method for a telecommunication device, comprising:
receiving, by the telecommunication device, a plurality of downlink transmission signals on a plurality of downlink carriers;
in response to the downlink transmission signals, transmitting, by the telecommunication device, at least one uplink control signal comprising a Channel Quality Indicator (CQI), a Scheduling Request (SR), or ACK/NACK according to at least one PUCCH resource;
wherein the at least one PUCCH resource is determined or used according to at least one configuration parameter specific to the telecommunication device, at least one carrier offset relative to at least one downlink carrier, at least one received PDCCH resource, a bandwidth of the first carrier, at least one PUCCH format type, a cell configuration, an orthogonal hopping sequence, or a cyclic shift pattern.

57. A method for a communication device, comprising:being configured with at least one uplink carrier and at least one downlink carrier according to a carrier aggregation configuration;
transmitting a first PUCCH format comprising a PUCCH format type information and power headroom report for at least one of the at least one uplink carrier, or
transmitting a second PUCCH format comprising at least one of at least one ACK/NACK signaling and at least one channel quality indicator in response to at least one downlink transmission on at least one of the at least one downlink carrier.
